Europäisches Patentamt

European Patent Office

Office européen des brevets

(11) Publication number: **0 330 632**
A1

## (12) EUROPEAN PATENT APPLICATION

(21) Application number: **89830071.0**

(22) Date of filing: **23.02.89**

(51) Int. Cl.⁴: **B 62 D 15/02**
**B 60 K 23/04**

(30) Priority: **24.02.88 IT 6713688**

(43) Date of publication of application:
**30.08.89 Bulletin 89/35**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Scotti, Alessandro**
**Via Galilei, 4**
**I-24052 Azzano S. Paolo (Bergamo) (IT)**

**Fratti, Gerolamo**
**Via G. Verdi, 20**
**I-20079 Castiraga Vidardo (Milano) (IT)**

(74) Representative: **Buzzi, Franco et al**
**c/o Jacobacci-Casetta & Perani S.p.A. Via Alfieri, 17**
**I-10121 Torino (IT)**

(54) Device for measuring the steering angle for electronic control systems for the differentials and the dual drive of a tractor.

(57) A device for measuring the steering angle for electronic control systems for the differentials and the dual drive of a tractor comprises an electro-mechanical sensor (10, 100) for continuous or discontinuous measurement, operatively associated with the articulation between one of the rotary journals (5) of one of the steered wheels (1) and the body of the axle (3).

FIG. 1

EP 0 330 632 A1

## Description

**Device for measuring the steering angle for electronic control systems for the differentials and the dual drive of a tractor**

The present invention relates generally to electronic control systems for the differentials and the dual drive of a tractor, of the type including an electronic control unit supplied by operative condition sensors of the tractor and arranged to pilot the electro-actuators of the devices for engaging and disengaging the four-wheel drive and for locking and unlocking the differentials.

A system for this type is described, for example, in French Utility Model Application N. 8813941 in the name of the same applicants. In this device, the sensors which supply the electronic control unit include, inter alia, devices for measuring the steering angle of the steered wheels of the tractor. By means of the signals generated by these devices, the system is able automatically to unlock the front and rear differentials and/or disengage the four-wheel drive of the tractor when the steering angle exceeds a predetermined threshold value. These devices for measuring the steering angle constitute the subject of the present invention and the particular purpose is to acheive a measuring device which is practical, simple and cheap to manufacture and assemble.

According to the invention, this object is achieved by means of a device for measuring the steering angle for electronic control systems for the differentials and the dual drive of a tractor, in which the steered wheels are mounted on respective hubs articulated to the ends of an axle body by means of respective pairs of rotary journals, characterised in that it includes an electro-mechanical sensor for continuous or discontinuous measurement, operatively associated with the articulation between one of the journals and the axle body.

The sensor may be of the potentiometric type or of the on-off switch type and various solutions for its assembly are envisaged which are described below with reference to the appended drawings, provided purely by way of non-limiting example, in which:

Figure 1 is a partially-sectioned schematic axial view of a steered wheel of an agricultural tractor having an associated device for measuring the steering angle, according to a first embodiment of the invention, and

Figures 2 to 6 show respective variants of the measuring device of the invention,

Figure 7 is a partial cross-section taken on the line VII-VII of Figure 6,

Figure 8 shows a further variant of the device,

Figure 9 is a plan view from above, taken on the arrow IX in Figure 8,

Figure 10 and 11 show further variants of the device, and

Figure 12 is a plan view from above, taken on the arrow XII of Figure 11.

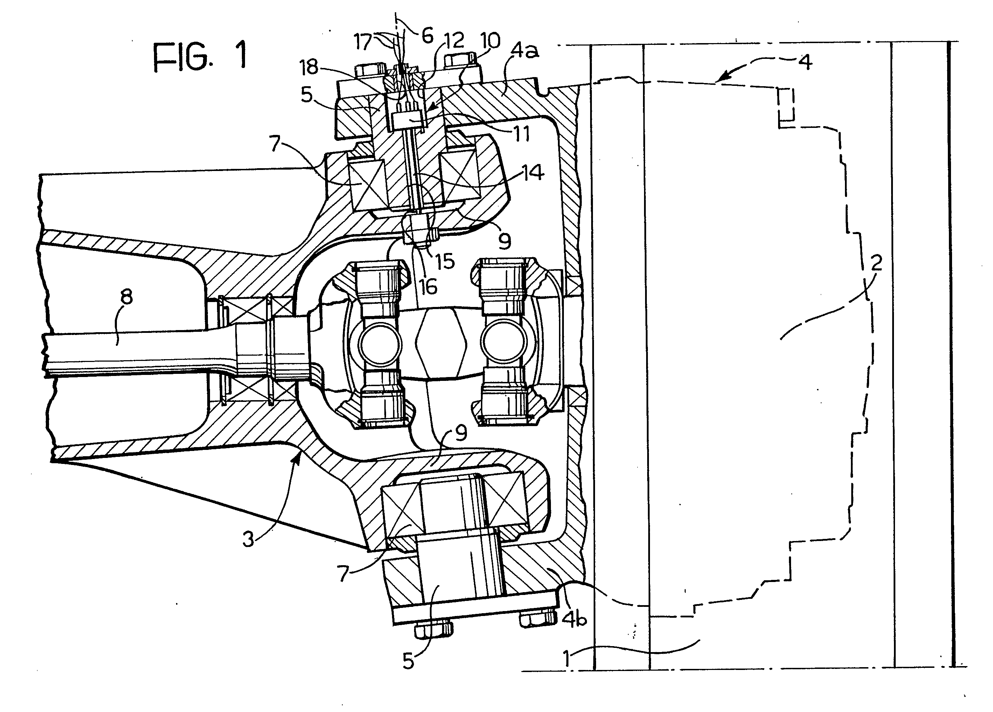

With reference initially to Figure 1, part of a front steered wheel of an agricultural tractor is indicated 1 and is shown schematically mounted on a hub 2 carried at one end of an axle body 3 and driven by means of a drive-shaft 8. The hub 2 is fixed to a forked support 4 the upper and lower arms 4a, 4b of which carry respective journals 5 aligned along a common, substantially-vertical axis 6 and rotatably supported by means of respective rolling bearings 7 by respective bosses 9 formed at the corresponding end of the axle body 3.

An electro-mechanical transducer or sensor of the potentiometric type which measures continuously is generally indicated 10 and is operatively associated with the articulation between the upper journal 5 and its boss 9 on the axle body 3 to measure the steering angle of the wheel 1. In the embodiment of Figure 1, the sensor 10 includes a body 11 housed in an upper axial cavity 12 in the journal 5, the top of which is closed by a flange 5a of the journal 5. The body 11 of the sensor 10, which is thus fast for rotation with the journal 5, is associated with a transmission shaft 14 extending through an axial through-hole 15 in the journal 5 and locked at its relatively lower end to a stationary abutment 16 carried by the base of the boss 9.

In operation, the rotation of the body 11 relative to the shaft 14 causes the transducer 10 to generate electrical signals indicative of the steering angle. These signals are supplied through lines 17 which pass through a sealed passage 18 in the flange 5a of the journal 5 to an electronic control unit, not illustrated. This electronic unit is arranged in known manner to pilot the electro-actuators of the devices for engaging and disengaging the four-wheel drive and/or locking and unlocking the differentials of the tractor so as to commute these devices automatically and reversibly into the condition corresponding respectively to engagement of the four-wheel drive and unlocking of the differentials when the steering angle detected by the sensor 10 exceeds a predetermined threshold value.

The main advantage of the arrangement of Figure 1 lies in the fact that the sensor 10 may be mounted quickly and easily and, when mounted, is effectively protected and shielded from the exterior.

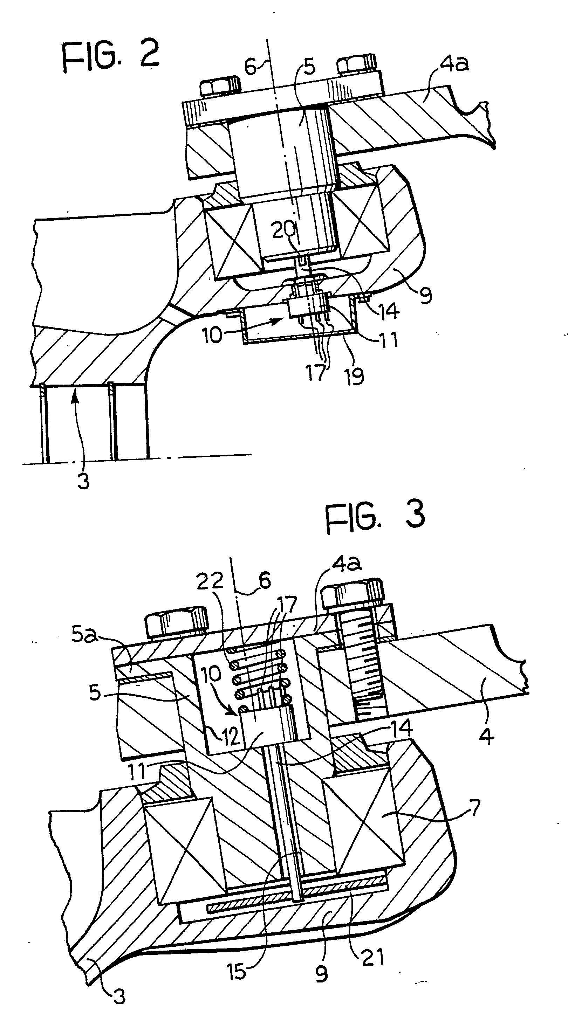

The variants shown in Figures 2 to 12 are generally similar to the embodiment described above and only the differences will be described in detail, the same reference numerals being used for identical or similar parts.

In the case of Figure 2, the body 11 of the transducer 10 is fixed in a stationary position to the base of the boss 9 and is protected by a cover 19 fitted to the boss 9. In this case, the transmission shaft 14 is shorter and is coupled for rotation with the journal 5 by means of an abutment 20 projecting from the lower end thereof. The advantage of this arrangement over that of Figure 1 lies in the fact that the lines 17 connecting the transducer 10 to the electronic control unit do not move.

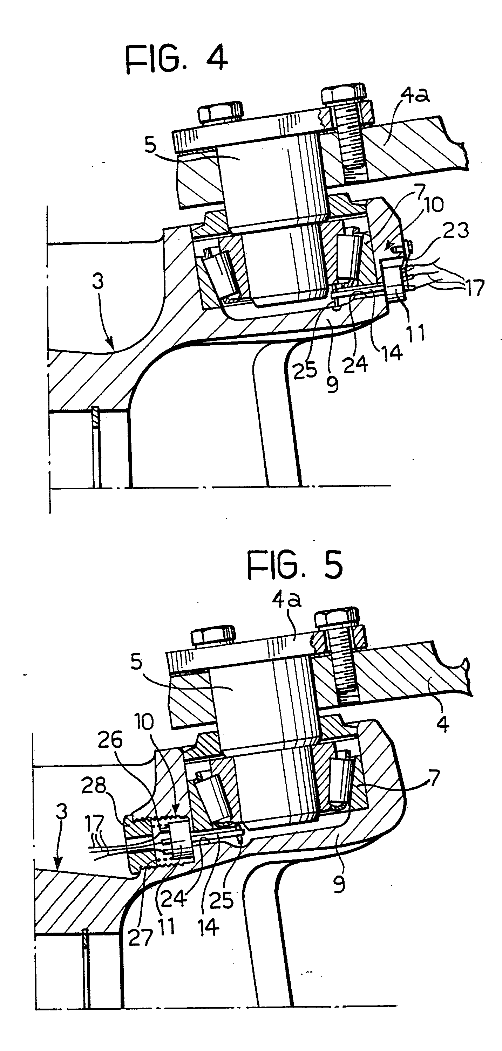

The variant of Figure 3 is essentially similar to the embodiment of Figure 1 and differs only in that the axial hole 15 in the journal 5 through which the transmission shaft 14 of the transducer 10 extends is offset from the axis 6 of the journal 5 and in that the shaft 14 is locked to the boss 9 for rotation by means of a friction disc 21 which is eccentric relative to the axis 6 and disposed in contact with the inner side wall of the boss 9. This friction system could be replaced by a geared coupling between the shaft 14 and the boss 9.

In this embodiment, a helical compression spring 22 is also interposed between the arm 4a of the forked support 4 and the body 11 of the transducer 10 to keep the latter in position against the bottom of the cavity 12 in the journal 5.

In the case of Figure 4, the body 11 of the transducer 10 is fitted to the outer side of the boss 9 and is held in position by means of a flat spring 23. In this case the transmission shaft 14 extends radially of the journal 5 through a side aperture 24 in the boss 9 and is rotated by the journal 5 by means of a friction wheel 25 disposed in contact with the inner race of the rolling bearing 7. The friction wheel 25 could also be replaced by a gear transmission in this case.

The arrangement illustrated in Figure 5 is similar to that of Figure 4 and differs therefrom only in that the body 11 of the transducer 10 is housed in a recess 26 formed in the inner side of the boss 9. In this case, the body 11 is held in position by the action of a helical compression spring 27 which bears against a stopper 28 fitted into the recess 26. The rotation of the transmission shaft 14 by the journal 5 is achieved in a similar manner to that described with reference to the embodiment of Figure 4. In both cases, the transducer 10 may be positioned in the zone between the arm 4a of the forked support 4 and the boss 9 instead of in correspondence with the boss 9: however, in this case, the transducer 10 is less effectively protected from dust and external agents.

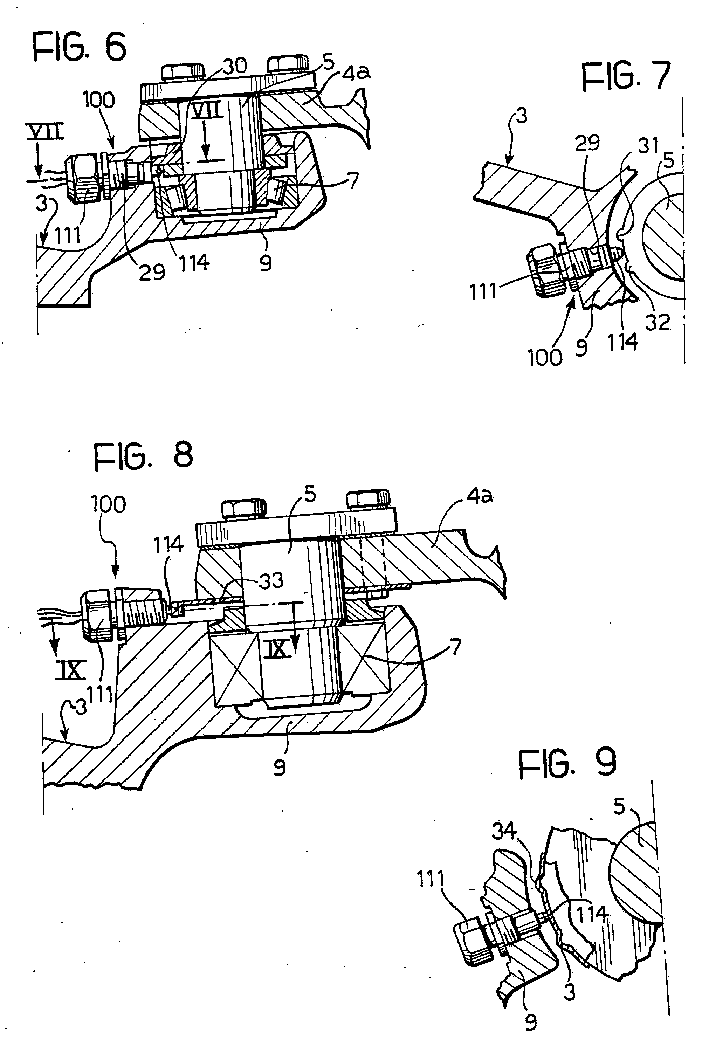

In the case of Figures 6 to 12, the transducer for measuring the steering angle is of a discontinuous measuring type instead of being of the continuous-measurement, potentiometric type: it is in effect constituted by an on-off switch 100 having a body 111 and a slidable feeler 114 for switching the switch.

In the case of Figure 6, the transducer 100 is screwed into a threaded hole 29 formed inside the boss 9 and its feeler 114 cooperates with a cam member 30 formed by a ring fixed to the outside of the journal 5 and carrying two abutment projections 31, 32 disposed, as illustrated in detail in Figure 7, in positions corresponding to predetermined threshold values for the steering angle in one sense and in the opposite sense.

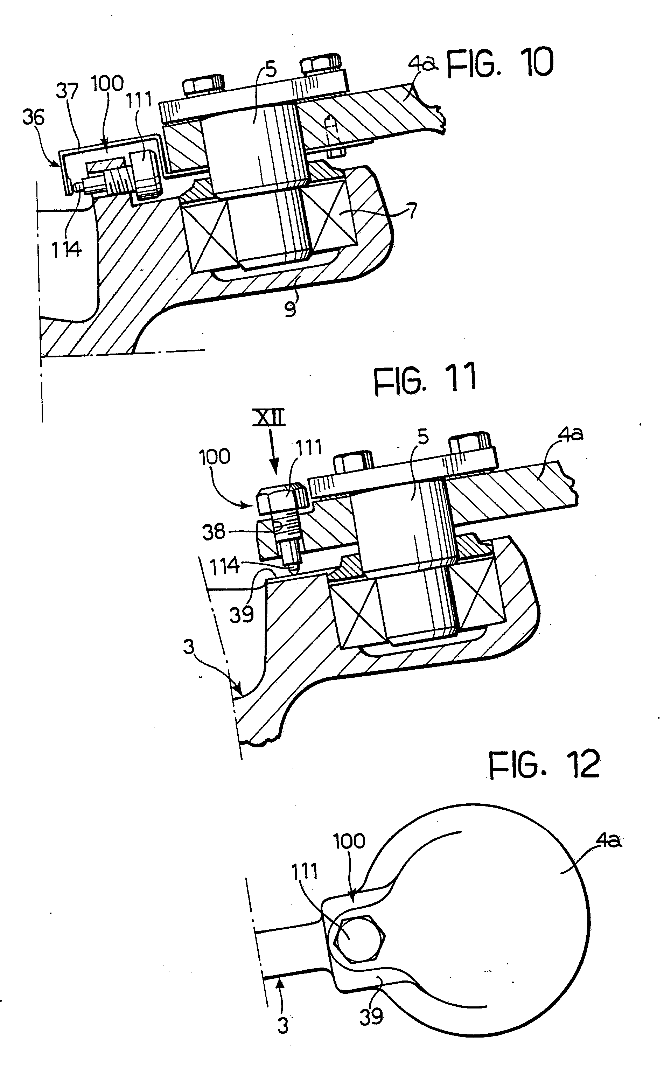

In the variants shown in Figures 8 and 9, the transducer 100 is spaced radially from the journal 5 and the cam member is constituted by a disk 33 having a larger diameter than that of the ring 30 and provided with cam projections 34, 35 located in angular positions corresponding to those of the projections 31 and 32 of the previous version. This solution has the advantage of ensuring greater precision in the detection of the steering angle.

Yet greater precision may be obtained from the embodiment of Figure 10, in which the feeler 114 faces away from the journal 5 and the cam member 36 is fixed for rotation to the journal 5 and has an even greater diameter. Moreover, this cam member 36 is shaped so as to form a cover 37 for protecting the transducer 100 effectively.

Both in the embodiment of Figures 8 and 9 and in that of Figure 10, the cam member 33 or 36 may be located between the top of the journal 5 and the arm 4a of the forked support 4. Moreover, in both cases, it is possible to form embodiments in which the cam member is fixed and the transducer 100 with its feeler 114 is rotatable together with the journal 5.

A solution of this type is shown in Figures 11 and 12 in which, however, the transducer 100 is disposed parallel to the axis of the journal 5 and is screwed into a threaded hole 38 in the arm 4a of the forked support 4. In this case, the feeler 114 cooperates with a stationary cam member 39 formed at the top of the inner side of the boss 9 and has a pair of projections or recesses disposed in angular positions corresponding to the threshold values of the steering angle in one sense and in the opposite sense.

In the case of the axial arrangement described above, it is also possible to provide for an inverted configuration with the transducer 100 stationary and the cam member 39 rotatable with the journal 5.

## Claims

1. A device for measuring the steering angle for electronic control systems for the differentials and the dual drive of a tractor, in which the steered wheels are mounted on respective hubs articulated to the ends of an axle body by means of respective pairs of rotary journals, characterised in that it includes an electro-mechanical sensor (10, 100) for continuous or discontinuous measurement, operatively associated with the articulation between one of the journals (5) and the axle body (3).

2. A device according to Claim 1, characterised in that the sensor (10) is of the potentiometric type.

3. A device according to Claim 1, characterised in that the sensor (100) is of the on-off switch type.

4. A device according to Claim 2, characterised in that the sensor (10) comprises a body (11) housed in an axial cavity (12) in the journal (5) and fast for rotation therewith, and a transmission shaft (14) which passes through an axial through-hole (15) in the journal (5), the body (11) of the sensor (10) being rotatable relative thereto, the shaft (14) being locked against rotation by a stationary abutment (16) fixed to the axle body.

5. A device according to Claim 2, characterised in that the sensor (10) includes a stationary body (11) fixed to the axle body (3) and a transmission shaft (14) rotatable relative to the body (11) of the sensor (10) and rotated by a rotatable abutment (20) carried by the journal (5).

6. A device according to Claim 2, characterised in that the sensor (10) includes a body

(11) housed in an axial cavity (12) in the journal (5) and fast for rotation therewith, and a transmission shaft (14) which passes through an axial through-hole (15) in the journal (5), the body (11) of the sensor (10) being rotatable relative thereto, the shaft (14) being coupled to the axle body (13) by means of friction wheels (21) or gears.

7. A device according to Claim 2, characterised in that the sensor (10) includes a stationary body (11) fixed to the side of the axle body (3) and a transmission shaft (14) extending radially of the journal (5) and connected thereto for rotation by means of friction wheels (25) or gears.

8. A device according to Claim 7, characterised in that the body (11) of the sensor (10) is housed in a cavity (26) in the axle body (3).

9. A device according to Claim 3, characterised in that the sensor (100) includes a stationary body (111) fixed to the axle body (3) and carrying a feeler (114) with which a cam member (30, 33, 36) rotatable with the journal (5) cooperates.

10. A device according to Claim 3, characterised in that the sensor (100) includes a body (111) rotatable with the journal (5) and carrying a feeler (114) with which a stationary cam member (39) fixed to the axle body (3) cooperates.

11. A device according to Claim 9 or Claim 10, characterised in that the feeler (114) of the sensor (100) is located parallel to the journal (5).

12. A device according to Claim 9 or Claim 10, characterised in that the feeler (114) of the sensor (100) is disposed radially of the journal (5).

FIG. 1

FIG. 2

FIG. 3

## FIG. 4

## FIG. 5

FIG. 6

FIG. 7

FIG. 8

FIG. 9

FIG. 10

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | WO-A-8 601 467 (ZAHNRADFABRIK FRIEDRICHSHAFEN) * Page 12, claim 2; page 13, claim 9; figures 2,4 * | 1-6 | B 62 D 15/02 B 60 K 23/04 |
| A | | 9 | |
| X | PATENT ABSTRACTS OF JAPAN, vol. 9, no. 158 (M-393)[1881], 3rd July 1985, page 95 M 393; & JP-A-60 33 169 (KUBOTA TEKKO K.K.) 20-02-1985 * Abstract; figures * | 1,2 | |
| A | PATENT ABSTRACTS OF JAPAN, vol. 7, no. 199 (M-240)[1344], 3rd September 1983; & JP-A-58 97 568 (NISSAN JIDOSHA K.K.) 10-06-1983 * Abstract * | 1,3 | |
| A | DE-A-2 821 691 (BUNCAK) * Page 5, last paragraph - page 6, paragraph 1 * | 6,7 | TECHNICAL FIELDS SEARCHED (Int. Cl.4) |
| A | US-A-4 633 966 (FOTHERINGHAM) * Column 4, line 64 - column 5, line 14; figures 1,2 * | 1,2 | B 60 K B 62 D |

The present search report has been drawn up for all claims

| Place of search | Date of completion of the search | Examiner |
|---|---|---|
| THE HAGUE | 18-05-1989 | MENDE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)